Europäisches Patentamt

European Patent Office

Office européen des brevets

(19)

(11) **EP 1 531 414 A1**

(12) ## EUROPEAN PATENT APPLICATION

(43) Date of publication:
**18.05.2005 Bulletin 2005/20**

(51) Int Cl.⁷: **G06F 17/60**, G06F 3/033

(21) Application number: **04105905.6**

(22) Date of filing: **02.03.2001**

(84) Designated Contracting States:
**AT BE CH CY DE DK ES FI FR GB GR IE IT LI LU MC NL PT SE TR**

(30) Priority: **02.03.2000 US 186322 P**
**09.06.2000 US 590692**

(62) Document number(s) of the earlier application(s) in accordance with Art. 76 EPC:
**01920183.9 / 1 319 211**

(71) Applicant: **Trading Technologies International, Inc**
**Chicago, Illinois 60606 (US)**

(72) Inventors:
• **Kemp, Gary, Allan**
  **Winnetka, IL 60093 (US)**
• **Schluetter, Jens-Uwe**
  **Evanston, IL 60201 (US)**
• **Brumfield, Harris**
  **Chicago, IL 60614 (US)**

(74) Representative: **Walaski, Jan Filip et al**
**Venner Shipley LLP**
**20 Little Britain**
**London EC1A 7DH (GB)**

Remarks:
This application was filed on 18 - 11 - 2004 as a divisional application to the application mentioned under INID code 62.

(54) **A method and device for facilitating trading**

(57)    A method and system for reducing the time it takes for a trader to place a trade when electronically trading on an exchange, thus increasing the likelihood that the trader will have orders filled at desirable prices and quantities. The "Mercury" display and trading method of the present invention ensure fast and accurate execution of trades by displaying market depth on a vertical or horizontal plane, which fluctuates logically up or down, left or right across the plane as the market prices fluctuates. This allows the trader to trade quickly and efficiently.

**FIG. 3**

EP 1 531 414 A1

**Description**

Field of Invention

The present invention is directed to the electronic trading of commodities. Specifically, the invention provides a trader with a versatile and efficient tool for executing trades. It facilitates the display of and the rapid placement of trade orders within the market trading depth of a commodity, where a commodity includes anything that can be traded with quantities and/or prices.

Background Of The Invention

At least 60 exchanges throughout the world utilize electronic trading in varying degrees to trade stocks, bonds, futures, options and other products. These electronic exchanges are based on three components: mainframe computers (host), communications servers, and the exchange participants' computers (client). The host forms the electronic heart of the fully computerized electronic trading system. The system's operations cover order-matching, maintaining order books and positions, price information, and managing and updating the database for the online trading day as well as nightly batch runs. The host is also equipped with external interfaces that maintain uninterrupted online contact to quote vendors and other price information systems.

Traders can link to the host through three types of structures: high speed data lines, high speed communications servers and the Internet. High speed data lines establish direct connections between the client and the host. Another connection can be established by configuring high speed networks or communications servers at strategic access points worldwide in locations where traders physically are located. Data is transmitted in both directions between traders and exchanges via dedicated high speed communication lines. Most exchange participants install two lines between the exchange and the client site or between the communication server and the client site as a safety measure against potential failures. An exchange's internal computer system is also often installed with backups as a redundant measure to secure system availability. The third connection utilizes the Internet. Here, the exchange and the traders communicate back and forth through high speed data lines, which are connected to the Internet. This allows traders to be located anywhere they can establish a connection to the Internet.

Irrespective of the way in which a connection is established, the exchange participants' computers allow traders to participate in the market. They use software that creates specialized interactive trading screens on the traders' desktops. The trading screens enable traders to enter and execute orders, obtain market quotes, and monitor positions. The range and quality of features available to traders on their screens varies according to the specific software application being run. The installation of open interfaces in the development of an exchange's electronic strategy means users can choose, depending on their trading style and internal requirements, the means by which they will access the exchange.

The world's stock, bond, futures and options exchanges have volatile products with prices that move rapidly. To profit in these markets, traders must be able to react quickly. A skilled trader with the quickest software, the fastest communications, and the most sophisticated analytics can significantly improve his own or his firm's bottom line. The slightest speed advantage can generate significant returns in a fast moving market. In today's securities markets, a trader lacking a technologically advanced interface is at a severe competitive disadvantage.

Irrespective of what interface a trader uses to enter orders in the market, each market supplies and requires the same information to and from every trader. The bids and asks in the market make up the market data and everyone logged on to trade can receive this information if the exchange provides it. Similarly, every exchange requires that certain information be included in each order. For example, traders must supply information like the name of the commodity, quantity, restrictions, price and multiple other variables. Without all of this information, the market will not accept the order. This input and output of information is the same for every trader.

With these variables being constant, a competitive speed advantage must come from other aspects of the trading cycle. When analyzing the time it takes to place a trade order for a given commodity, various steps contribute in different amounts to the total time required. Approximately 8% of the total time it takes to enter an order elapses between the moment the host generates the price for the commodity and the moment the client receives the price. The time it takes for the client application to display the price to the trader amounts to approximately 4%. The time it takes for a trade order to be transmitted to the host amounts to approximately 8%. The remainder of the total time it takes to place an order, approximately 80 % , is attributable to the time required for the trader to read the prices displayed and to enter a trade order. The present invention provides a significant advantage during the slowest portion of the trading cycle -- while the trader manually enters his order. Traders recognize that the value of time savings in this portion may amount to millions of dollars annually.

In existing systems, multiple elements of an order must be entered prior to an order being sent to market, which is time consuming for the trader. Such elements include the commodity symbol, the desired price, the quantity and whether a buy or a sell order is desired. The more time a trader takes entering an order, the more likely the price on which he wanted to bid or offer will change or not be available in the market. The market is fluid as many traders are sending orders to the market simultaneously. It fact, successful markets strive to have such a high volume of trading that any trader who wishes to enter an order will find a match and have the order filled quickly, if not immediately. In such liquid markets, the prices of the commodities fluctuate rapidly. On a trading screen, this results in rapid changes in the price and quantity fields within the market grid. If a trader intends to enter an order at a particular price, but misses the price because the market prices moved before he could enter the order, he may lose hundreds, thousands, even millions of dollars. The faster a trader can trade, the less likely it will be that he will miss his price and the more likely he will make money.

Summary Of The Invention

The inventors have developed the present invention which overcomes the drawbacks of the existing trading systems and dramatically reduces the time it takes for a trader to place a trade when electronically trading on an exchange. This, in turn, increases the likelihood that the trader will have orders filled at desirable prices and quantities.
The "Mercury" display and trading method of the present invention ensure fast and accurate execution of trades by displaying market depth on a vertical or horizontal plane, which fluctuates logically up or down, left or right across the plane as the market prices fluctuates. This allows the trader to trade quickly and efficiently.
Specifically, the present invention is directed to a graphical user interface for displaying the market depth of a commodity traded in a market, including a dynamic display for a plurality of bids and for a plurality of asks in the market for the commodity and a static display of prices corresponding to the plurality of bids and asks. In this embodiment the pluralities of bids and asks are dynamically displayed in alignment with the prices corresponding thereto. Also described herein is a method and system for placing trade orders using such displays.
These embodiments, and others described in greater detail herein, provide the trader with improved efficiency and versatility in placing, and thus executing, trade orders for commodities in an electronic exchange. Other features and advantages of the present invention will become apparent to those skilled in the art from the following detailed description. It should be understood, however, that the detailed description and specific examples, while indicating preferred embodiments of the present invention, are given by way of illustration and not limitation. Many changes and modifications within the scope of the present invention may be made without departing from the spirit thereof, and the invention includes all such modifications.

Brief Description Of The Drawings

Figure 1 illustrates the network connections between multiple exchanges and client sites;
Figure 2 illustrates screen display showing the inside market and the market depth of a given commodity being traded;
Figure 3 illustrates the Mercury display of the present invention;
Figure 4 illustrates the Mercury display at a later time showing the movement of values when compared to Figure 3;
Figure 5 illustrates a Mercury display with parameters set in order to exemplify the Mercury trading method; and
Figure 6 is a flowchart illustrating the process for Mercury display and trading.

Detailed Description Of The Preferred Embodiments

As described with reference to the accompanying figures, the present invention provides a display and trading method to ensure fast and accurate execution of trades by displaying market depth on a vertical or horizontal plane, which fluctuates logically up or down, left or right across the plane as the market prices fluctuates. This allows the trader to place trade orders quickly and efficiently. A commodity's market depth is the current bid and ask prices and quantities in the market. The display and trading method of the invention increase the likelihood that the trader will be able to execute orders at desirable prices and quantities.
In the preferred embodiment, the present invention is implemented on a computer or electronic terminal. The computer is able to communicate either directly or indirectly (using intermediate devices) with the exchange to receive and transmit market, commodity, and trading order information. It is able to interact with the trader and to generate contents and characteristics of a trade order to be sent to the exchange. It is envisioned that the system of the present invention can be implemented on any existing or future terminal or device with the processing capability to perform the functions described herein. The scope of the present invention is not limited by the type of terminal or device used. Further, the specification refers to a single click of a mouse as a means for user input and interaction with the terminal display as an example of a single action of the user. While this describes a preferred mode of interaction, the scope of the present invention is not limited to the use of a mouse as the input device or to the click of a mouse button as the user's single action. Rather, any action by a user within a short period of time, whether comprising one or more clicks of a mouse button or other input device, is considered a single action of the user for the purposes of the present invention.

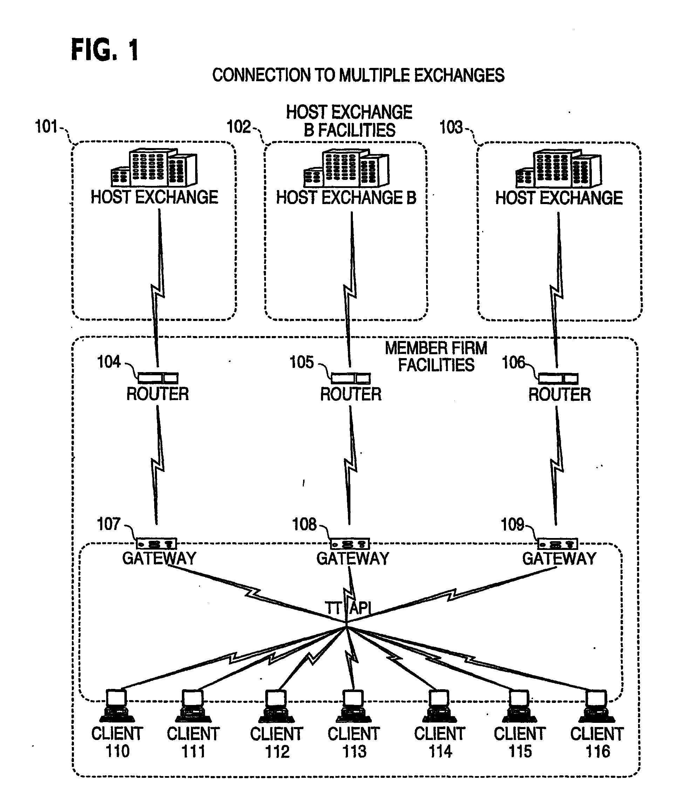

The system can be configured to allow for trading in a single or in multiple exchanges simultaneously. Connection of the system of the present invention with multiple exchanges is illustrated in Figure 1. This figure shows multiple host exchanges 101-103 connected through routers 104-106 to gateways 107-109. Multiple client terminals 110-116 for use as trading stations can then trade in the multiple exchanges through their connection to the gateways 107-109. When the system is configured to receive data from multiple exchanges, then the preferred implementation is to translate the data from various exchanges into a simple format. This "translation" function is described below with reference to Figure 1. An applications program interface ("TT API" as depicted in the figure) translates the incoming data formats from the different exchanges to a simple preferred data format. This translation function may be disposed anywhere in the network, for example, at the gateway server, at the individual workstations or at both. In addition, the storage at gateway servers and at the client workstations, and/or other external storage cache historical data such as order books which list the client's active orders in the market; that is, those orders that have neither been filled nor cancelled. Information from different exchanges can be displayed at one or in multiple windows at the client workstation. Accordingly, while reference is made through the remainder of the specification to a single exchange to which a trading terminal is connected, the scope of the invention includes the ability to trade, in accordance with the trading methods described herein, in multiple exchanges using a single trading terminal.

The preferred embodiments of the present invention include the display of "Market Depth" and allow traders to view the market depth of a commodity and to execute trades within the market depth with a single click of a computer mouse button. Market Depth represents the order book with the current bid and ask prices and quantities in the market. In other words, Market Depth is each bid and ask that was entered into the market, subject to the limits noted below, in addition to the inside market. For a commodity being traded, the "inside market" is the highest bid price and the lowest ask price.

The exchange sends the price, order and fill information to each trader on the exchange. The present invention processes this information and maps it through simple algorithms and mapping tables to positions in a theoretical grid program or any other comparable mapping technique for mapping data to a screen. The physical mapping of such information to a screen grid can be done by any technique known to those skilled in the art. The present invention is not limited by the method used to map the data to the screen display.

How far into the market depth the present invention can display depends on how much of the market depth the exchange provides. Some exchanges supply an infinite market depth, while others provide no market depth or only a few orders away from the inside market. The user of the present invention can also chose how far into the market depth to display on his screen.

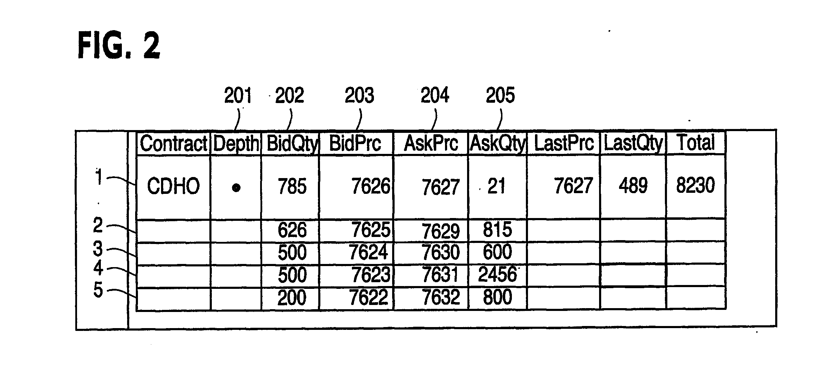

Figure 2 illustrates a screen display of an invention described in a commonly owned co-pending application entitled "Click Based Trading with Market Depth Display" serial no. _____, filed on _____, the contents of which are incorporated herein by reference. This display shows the inside market and the market depth of a given commodity being traded. Row 1 represents the "inside market" for the commodity being traded which is the best (highest) bid price and quantity and the best (lowest) ask price and quantity. Rows 2-5 represent the "market depth" for the commodity being traded. In the preferred embodiment of the present invention, the display of market depth (rows 2-5) lists the available next-best bids, in column 203, and asks, in column 204. The working bid and ask quantity for each price level is also displayed in columns 202 and 205 respectively (inside market - row 1). Prices and quantities for the inside market and market depth update dynamically on a real time basis as such information is relayed from the market.

In the screen display shown in Figure 2, the commodity (contract) being traded is represented in row 1 by the character string "CDH0". The Depth column 208 will inform the trader of a status by displaying different colors. Yellow indicates that the program application is waiting for data. Red indicates that the Market Depth has failed to receive the data from the server and has "timed out." Green indicates that the data has just been updated. The other column headings in this and all of the other figures, are defmed as follows. *BidQty (Bid Quantity)*: the quantity for each working bid, *BidPrc (Bid Price):* the price for each working bid, *AskPrc (Ask Price)*: the price for each working ask, *AskQty (Ask Quantity) :* the quantity for each working ask, *LastPrc (Last Price)*: the price for the last bid and ask that were matched in the market and *LastQty (Last Quantity):* the quantity traded at the last price. *Total* represents the total quantity traded of the given commodity.

The configuration of the screen display itself informs the user in a more convenient and efficient manner than existing systems. Traders gain a significant advantage by seeing the market depth because they can see trends in the orders in the market. The market depth display shows the trader the interest the market has in a given commodity at different price levels. If a large amount of bids or asks are in the market near the trader's position, he may feel he should sell or buy before the inside market reaches the morass of orders. A lack of orders above or below the inside market might prompt a trader to enter orders near the inside market. Without seeing the market depth, no such strategies could be utilized. Having the dynamic market depth, including the bid and ask quantities and prices of a traded commodity aligned with and displayed below the current inside market of the commodity conveys the information to the user in a more intuitive and easily understandable manner. Trends in the trading of the commodity and other relevant characteristics are more easily identifiable by the user through the use of the present invention.

Various abbreviations are used in the screen displays, and specifically, in the column headings of the screen displays reproduced herein. Some abbreviations have been discussed above. A list of common abbreviations and their meanings is provided in Table 1.

## Table I - Abbreviations

| COLUMN | DESCRIPTION | COLUMN | DESCRIPTION |
|---|---|---|---|
| Month | Expiration Month/Year | TheoBid | Theoretical Bid Price |
| Bid Mbr(1) | Bid Member ID | TheoAsk | Theoretical Ask Price |
| WrkBuys(2) | Working Buys for entire Group ID | QAct | Quote Action (Sends individual quotes) |
| BidQty | Bid Quantity | BQQ | Test Bid Quote Quantity |
| ThrshBid(6) | Threshold Bid Price | BQP | Test Bid Quote Price |
| BidPrc | Bid Price | Mkt BQQ | Market Bid Quote Quantity |
| Bid Qty Accum | Accumulated Bid Quantity | Mkt BQP | Market Bid Quote Price |
| BidPrc Avg | Bid Price Average | Quote | Checkbox activates / deactivates contract for quoting |
| AskPrc Avg | Ask Price Average | Mkt AQQ | Market Ask Quote Quantity |
| AskQty Accum | Accumulated Ask Quantity | Mkt AQP | Market Ask Quote Price |
| AskPrc | Ask Price | AQP | Ask Quote Price |
| ThrshAsk(6) | Threshold Ask Price | AQQ | Ask Quote Quantity |
| AskQty | Ask Quantity | Imp BidQty(5) | Implied Bid Quantity |
| WrkSells(2) | Working Sells for entire Group ID | Imp BidPrc(5) | Implied Bid Price |
| Ask Mbr(1) | Ask Member ID | Imp AskQty(5) | Implied Ask Quantity |
| NetPos | Net Position | Imp AskPrc(5) | Implied Ask Price |
| FFNetPos | Fast Fill Net Position | Gamma(3) | Change in Delta given 1 pt change in underlying |
| LastPrc | Last Price | Delta(3) | Change in price given 1 pt change in underlying |
| LastQty | Last Quantity | Vola(3) | Percent volatility |
| Total | Total Traded Quantity | Vega(3) | Price change given 1% change in Vola |
| High | High Price | Rho(3) | Price change given 1% change in interest rate |
| Low | Low Price | Theta(3) | Price change for every day that elapses |
| Open | Opening Price | Click Trd | Activate / deactivate click trading by contract |
| Close | Closing Price | S (Status) | Auction, Closed, FastMkt, Not Tradable, Pre-trading, Tradable, S = post-trading |
| Chng | Last Price-Last Close | Expiry | Expiration Month/Year |
| TheoPrc | Theoretical Price | | |

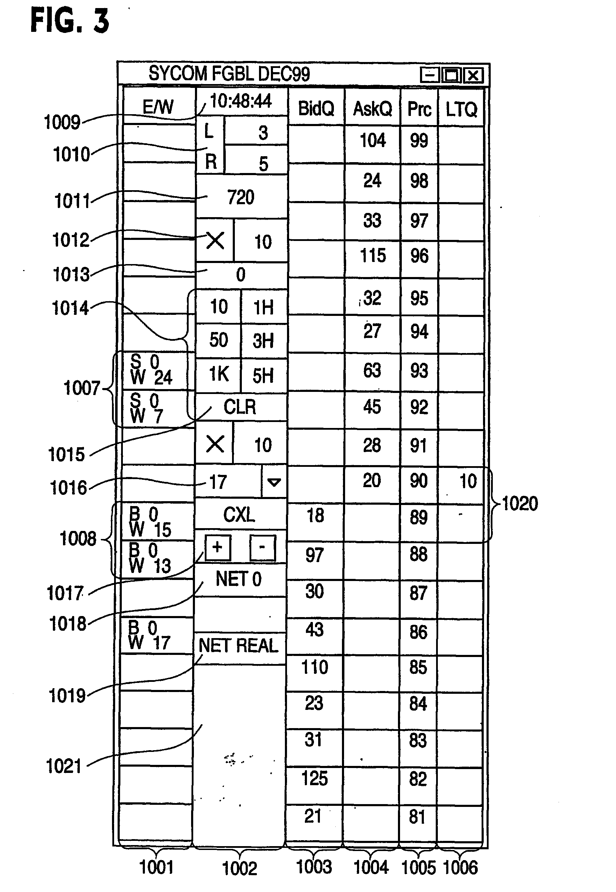

As described herein, the display and trading method of the present invention provide the user with certain advantages over systems in which a display of market depth, as shown in Figure 2, is used. The Mercury display and trading method of the present invention ensure fast and accurate execution of trades by displaying market depth on a vertical or horizontal plane, which fluctuates logically up or down, left or right across the plane as the market prices fluctuates. This allows the trader to trade quickly and efficiently. An example of such a Mercury display is illustrated in the screen display of Figure 3.

The display of market depth and the manner in which traders trade within the market depth can be effected in different manners, which many traders will find materially better, faster and more accurate. In addition, some traders may find the display of market depth to be difficult to follow. In the display shown in Figure 2, the market depth is displayed vertically so that both Bid and Ask prices descend the grid. The Bid prices descend the market grid as the prices decrease. Ask prices also descend the market grid as these prices actually increase. This combination may be considered counterintuitive and difficult to follow by some traders.

The Mercury display overcomes this problem in an innovative and logical manner. Mercury also provides an order entry system, market grid, fill window and summary of market orders in one simple window. Such a condensed display materially simplifies the trading system by entering and tracking trades in an extremely efficient manner. Mercury displays market depth in a logical, vertical fashion or horizontally or at some other convenient angle or configuration. A vertical field is shown in the figures and described for convenience, but the field could be horizontal or at an angle. In turn, Mercury further increases the speed of trading and the likelihood of entering orders at desired prices with desired quantities. In the preferred embodiment of the invention, the Mercury display is a static vertical column of prices with the bid and ask quantities displayed in vertical columns to the side of the price column and aligned with the corresponding bid and ask prices. An example of this display is shown in Figure 3.

Bid quantities are in the column 1003 labeled BidQ and ask quantities are in column 1004 labeled AskQ. The representative ticks from prices for the given commodity are shown in column 1005. The column does not list the whole prices (e.g. 95.89), but rather, just the last two digits (e.g. 89). In the example shown, the inside market, cells 1020, is 18 (best bid quantity) at 89 (best bid price) and 20 (best ask quantity) at 90 (best ask price). In the preferred embodiment of the invention, these three columns are shown in different colors so that the trader can quickly distinguish between them.

The values in the price column are static; that is, they do not normally change positions unless a re-centering command is received (discussed in detail later). The values in the Bid and Ask columns however, are dynamic; that is, they move up and down (in the vertical example) to reflect the market depth for the given commodity. The LTQ column 1006 shows the last traded quantity of the commodity. The relative position of the quantity value with respect to the Price values reflects the price at which that quantity was traded. Column 1001 labeled E/W (entered/working) displays the current status of the trader's orders. The status of each order is displayed in the price row where it was entered. For example, in cells 1007, the number next to S indicates the number of the trader's ordered lots that have been sold at the price in the specific row. The number next to W indicates the number of the trader's ordered lots that are in the market, but have not been filled-i.e. the system is working on filling the order. Blanks in this column indicate that no orders are entered or working at that price. In cells 1008, the number next to B indicates the number of the trader's ordered lots that have been bought at the price in the specific row. The number next to W indicates the number of the trader's ordered lots that are in the market, but have not been filled—i.e. the system is working on filling the order.

Various parameters are set and information is provided in column 1002. For example, "10:48:44" in cell 1009 shows the actual time of day. The L and R fields in cell 1010 indicate a quantity value, which may be added to the order quantity entered. This process is explained below with respect to trading under Mercury. Below the L and R fields, in cell 1011, a number appears which represents the current market volume. This is the number of lots that have been traded for the chosen contract. Cell 1012, "X 10", displays the Net Quantity, the current position of the trader on the chosen contract. The number "10" represents the trader's buys minus sells. Cell 1013 is the "Current Quantity"; this field represents the quantity for the next order that the trader will send to market. This can be adjusted with right and left clicks (up and down) or by clicking the buttons which appear below the Current Quantity in cells 1014. These buttons increase the current quantity by the indicated amount; for example, "10" will increase it by 10; "1H" will increase it by 100; "1K" will increase it by 1000. Cell 1015 is the Clear button; clicking this button will clear the Current Quantity field. Cell 1016 is the Quantity Description; this is a pull down menu allowing the trader to chose from three Quantity Descriptions. The pull down menu is displayed when the arrow button in the window is clicked. The window includes NetPos, Offset and a field allowing the trader to enter numbers. Placing a number in this field will set a default buy or sell quantity. Choosing "Offset" in this field will enable the L/R buttons of cell 1010. Choosing "NetPos" in this field will set the current Net Quantity (trader's net position) as the trader's quantity for his next trade. Cell 1017 are +/- buttons; these buttons will alter the size of the screen—either larger (+) or smaller (-). Cell 1018 is used to invoke Net 0; clicking this button will reset the Net Quantity (cell 1011) to zero. Cell 1019 is used to invoke Net Real; clicking this button will reset the Net Quantity (cell 1011) to its actual position.

The inside market and market depth ascend and descend as prices in the market increase and decrease.

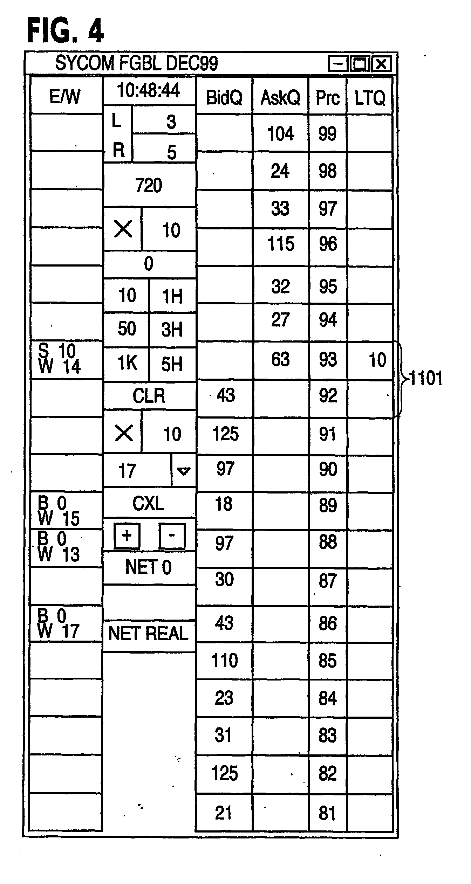

For example, Figure 4 shows a screen displaying the same market as that of Figure 3 but at a later interval where the inside market, cells 1101, has risen three ticks. Here, the inside market for the commodity is 43 (best bid quantity) at 92 (best bid price) and 63 (best ask quantity) at 93 (best ask price). In comparing Figures 3 and 4, it can be seen that the price column remained static, but the corresponding bids and asks rose up the price column. Market Depth similarly ascends and descends the price column, leaving a vertical history of the market.

As the market ascends or descends the price column, the inside market might go above or below the price column displayed on a trader's screen. Usually a trader will want to be able to see the inside market to assess future trades. The system of the present invention addresses this problem with a one click centering feature. With a single click at any point within the gray area, 1021, below the "Net Real" button, the system will re-center the inside market on the trader's screen. Also, when using a three-button mouse, a click of the middle mouse button, irrespective of the location of the mouse pointer, will re-center the inside market on the trader's screen.

The same information and features can be displayed and enabled in a horizontal fashion. Just as the market ascends and descends the vertical Mercury display shown in Figures 3 and 4, the market will move left and right in the horizontal Mercury display. The same data and the same information gleaned from the dynamical display of the data is provided. It is envisioned that other orientations can be used to dynamically display the data and such orientations are intended to come within the scope of the present invention.

Next, trading commodities, and specifically, the placement of trade orders using the Mercury display is described. Using the Mercury display and trading method, a trader would first designate the desired commodity and, if applicable, the default quantities. Then he can trade with single clicks of the right or left mouse button. The following equations are used by the system to generate trade orders and to determine the quantity and price to be associated with the trade order. The following abbreviations are used in these formulas: P = Price value of row clicked, R = Value in R field, L = Value in L field, Q = Current Quantity, $Q_a$ = Total of all quantities in AskQ column at an equal or better price than P, $Q_b$ = Total of all quantities in BidQ column at an equal or better price than P, N = Current Net Position, Bo = Buy order sent to market and So = Sell order sent to market.

Any order entered using right mouse button

$$Bo = (Q_a + R)P \qquad \qquad \text{(Eq. 1)}$$

If BidQ field clicked.

$$So = (Q_b + R)P \qquad \qquad \text{(Eq. 2)}$$

If AskQ field clicked.

Orders entered using the left mouse button

If "Offset" mode chosen in Quantity Description field then:

$$Bo = (Q_a + L)P \qquad \qquad \text{(Eq. 3)}$$

If BidQ field clicked.

$$So = (Q_b + L)P \qquad \qquad \text{(Eq. 4)}$$

If AskQ field clicked.
If "number" mode chosen in Quantity Description field then:

$$Bo = QP \qquad\qquad (Eq.\ 5)$$

$$So = QP \qquad\qquad (Eq.\ 6)$$

If "NetPos" mode chosen in Quantity Description field then:

$$Bo = NP \qquad\qquad (Eq.\ 7)$$

$$So = NP \qquad\qquad (Eq.\ 8)$$

Orders can also be sent to market for quantities that vary according to the quantities available in the market; quantities preset by the trader; and which mouse button the trader clicks. Using this feature, a trader can buy or sell all of the bids or asks in the market at or better than a chosen price with one click. The trader could also add or subtract a preset quantity from the quantities outstanding in the market. If the trader clicks in a trading cell—i.e. in the BidQ or AskQ column, he will enter an order in the market. The parameters of the order depend on which mouse button he clicks and what preset values he set.

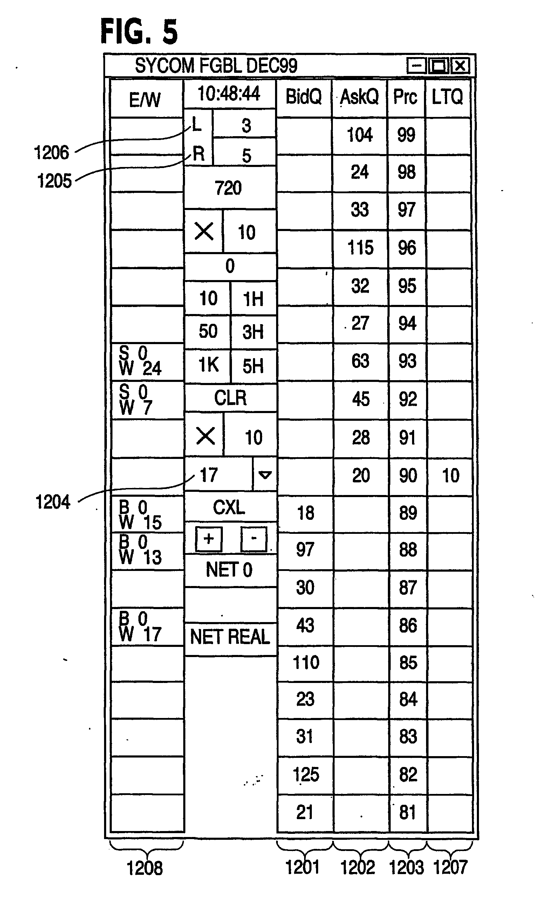

Using the screen display and values from Figure 5, the placement of trade orders using the Mercury display and trading method is now described using examples. A left click on the 18 in the BidQ column 1201 will send an order to market to buy 17 lots (quantity # chosen on the Quantity Description pull down menu cell 1204) of the commodity at a price of 89 (the corresponding price in the Prc column 1203). Similarly, a left click on the 20 in the AskQ column 1202 will send an order to market to sell 17 lots at a price of 90.

Using the right mouse button, an order would be sent to market at the price that corresponds to the row clicked for the total quantity of orders in the market that equal or better the price in that row plus the quantity in the R field 1205. Thus, a right click in the AskQ column 1202 in the 87 price row will send a sell order to market at a price of 87 and a quantity of 150. 150 is the sum of all the quantities 30, 97, 18 and 5. 30, 97 and 18 are all of the quantities in the market that would meet or better the trader's sell order price of 87. These quantities are displayed in the BidQ column 1201 because this column represents the orders outstanding in the market to purchase the commodity at each corresponding price. The quantity 5 is the quantity pre-set in the R field 1205.

Similarly, a right click in the BidQ column 1201 at the same price level of 87 would send a buy limit order to market for a quantity of 5 at a price of 87. The quantity is determined in the same manner as above. In this example, though, there are no orders in the market that equal or better the chosen price - there are no quantities in the AskQ column 1202 that equal or better this price. Therefore, the sum of the equal or better quantities is zero ("0"). The total order entered by the trader will be the value in the R field, which is 5.

An order entered with the left mouse button and the "Offset" option chosen in the quantity description field 1204 will be calculated in the same way as above, but the quantity in the L field 1206 will be added instead of the quantity in the R field 1205. Thus, a left click in the BidQ column 1201 in the 92 price row will send a buy order to market at a price of 92 and a quantity of 96. 96 is the sum of all the quantities 45, 28, 20 and 3. 45, 28 and 20 are all quantities in the market that would meet or better the trader's buy order price of 92. These quantities are displayed in the AskQ column 1202 because this column represents the orders outstanding in the market to sell the commodity at each corresponding price. The quantity 3 is the quantity pre-set in the L field 1206.

The values in the L or R fields may be negative numbers. This would effectively decrease the total quantity sent to market. In other words, in the example of a right click in the AskQ column 1202 in the 87 price row, if the R field was -5, the total quantity sent to market would be 140 (30 + 97 + 18 + (-5)).

If a trader chose the "NetPos" option in the quantity description field 1204, a right click would still work as explained above. A left click would enter an order with a price corresponding to the price row clicked and a quantity equal to the current Net position of the trader. The Net position of the trader is the the trader's current position on the chosen contract. In other words, if the trader has bought 10 more contracts than he has sold, this value would be 10. NetPos would not affect the quantity of an order sent with a right click.

If the trader chose a number value in the quantity description, a left click would send an order to market for the current quantity chosen by the trader. The default value of the current quantity will be the number entered in the quantity description field, but it could be changed by adjusting the figure in the current quantity field 1204.

This embodiment of the invention also allows a trader to delete all of his working trades with a single click of either the right or left mouse button anywhere in the last traded quantity (LTQ) column 1207. This allows a trader to exit the market immediately. Traders will use this feature when they are losing money and want to stop the losses from pilling up. Traders may also use this feature to quickly exit the market upon making a desired profit. The invention also allows a trader to delete all of his orders from the market at a particular price level. A click with either mouse button in the Entered/Working (E/W) column 1208 will delete all working orders in the cell that was clicked. Thus, if a trader believes that previously sent orders at a particular price that have not been filled would be poor trades, he can delete these orders with a single click.

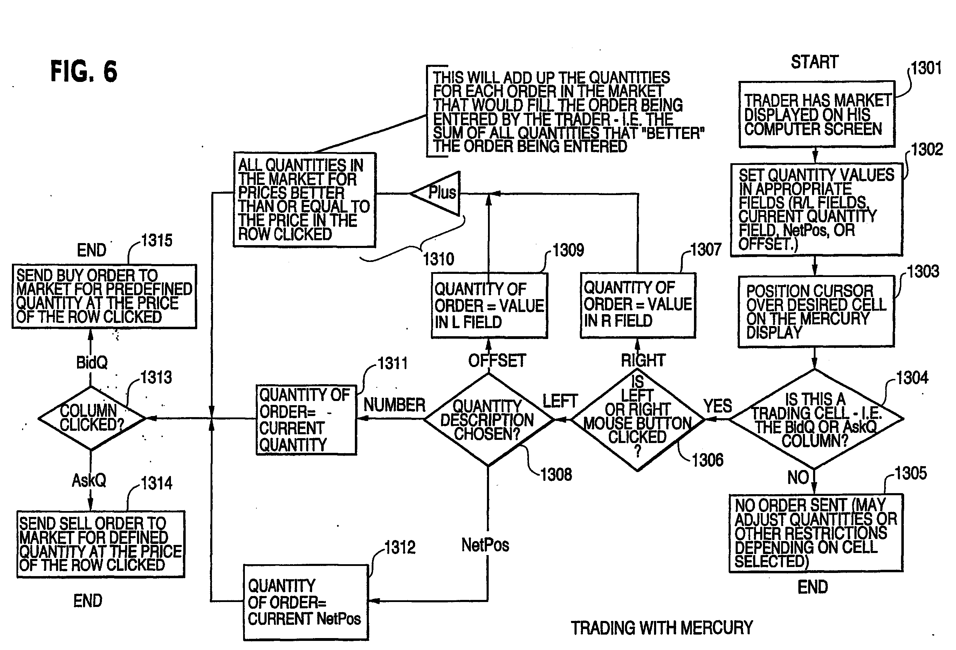

The process for placing trade orders using the Mercury display and trading method of the present invention as described above is shown in the flowchart of Figure 6. First, in step 1301, the trader has the Mercury display on the trading terminal screen showing the market for a given commodity. In step 1302, the parameters are set in the appropriate fields, such as the L and R fields and the Current Quantity, NetPos or Offset fields from the pull down menu. In step 1303, the mouse pointer is positioned and clicked over a cell in the Mercury display by the trader. In step 1304, the system determines whether the cell clicked is a tradeable cell (i.e. in the AskQ column or BidQ column). If not, then in step 1305, no trade order is created or sent and, rather, other quantities are adjusted or functions are performed based upon the cell selected. Otherwise, in step 1306, the system determines whether it was the left or the right button of the mouse that was clicked. If it was the right, then in step 1307, the system will use the quantity in the R field when it determines the total quantity of the order in step 1310. If the left button was clicked, then in step 1308, the system determines which quantity description was chosen: Offset, NetPos or an actual number.

If Offset was chosen, then the system, in step 1309, will use the quantity in the L field when it determines the total quantity of the order in step 1310. If NetPos was chosen, then the system, in step 1312, will determine that the total quantity for the trade order will be current NetPos value, i.e. the net position of the trader in the given commodity. If an actual number was used as the quantity description, then, in step 1311, the system will determine that the total quantity for the trade order will be the current quantity entered. In step 1310, the system will determine that the total quantity for the trade order will be the value of the R field (if step 1307 was taken) or the value of the L field (if step 1309 was taken) plus all quantities in the market for prices better than or equal to the price in the row clicked. This will add up the quantities for each order in the market that will fill the order being entered by the trader (plus the L or R value).

After either steps 1310, 1311 or 1312, the system, in step 1313, determines which column was clicked, BidQ or AskQ. If AskQ was clicked, then, in step 1314, the system sends a sell limit order to the market at the price corresponding to the row for the total quantity as already determined. If BidQ was clicked, then, in step 1315, the system sends a buy limit order to the market at the price corresponding to the row for the total quantity as already determined.

It should be understood that the above description of the invention and specific examples, while indicating preferred embodiments of the present invention, are given by way of illustration and not limitation. Many changes and modifications within the scope of the present invention may be made without departing from the spirit thereof, and the present invention includes all such changes and modifications.

**Claims**

1.    A device (110 - 116) for displaying information relating to a commodity being traded on an electronic exchange (101 - 103), comprising:

    an interface for receiving data relating to the commodity from the electronic exchange, the data comprising at least a current highest bid price and a current lowest ask price (1020,1101) available for the commodity;
    means for displaying a first indicator at a first area aligned with a first price level in a field of static prices (1005, 1203), the first indicator being associated with the current highest bid price for the commodity;
    means for displaying a second indicator at a second area aligned with a second price level in the field of static prices, the second indicator being associated with the current lowest ask price for the commodity; and
    means for updating the display of the first and second indicators, wherein in response to new data representing a different highest bid price and/or lowest ask price of the commodity received from the interface, at least one of the first and second indicators is moved relative to the field of static prices to a different area aligned with a different price level in the field of static prices.

2.    A device according to claim 1, wherein the first indicator is displayed in one of a plurality of areas in a bid display region (1003, 1201) and wherein the second indicator is displayed in one of a plurality of areas in an ask display region (1004, 1202).

3.    A device according to claim 2, wherein each area of the bid display region corresponds to a different price level along the static price axis and each area of the ask display region corresponds to a different price level along the static price axis.

**4.** A device according to claim 2 or 3, wherein the bid display region is separate from the ask display region.

**5.** A device according to any one of claims 2 to 4, wherein the bid and ask display regions comprise columns with a plurality of cells that are displayed as a grid such that the cells of each column are aligned.

**6.** A device according to any one of claims 2 to 5, wherein the bid and ask display regions are oriented vertically.

**7.** A device according to any one of claims 2 to 5, wherein the bid and ask display regions are oriented horizontally.

**8.** A device according to any one of the preceding claims, further comprising means for displaying an entered order indicator in relation to a price level in the field of static prices.

**9.** A device according to claim 8, wherein the entered order indicator is displayed in an entered order region (1001, 1208).

**10.** A device according to claim 9, wherein the entered order region comprises a plurality of cells, each cell corresponding to a price level in the field of static prices.

**11.** A device according to claim 9 or 10, wherein the entered order indicator is selectable by a user input means so as to receive a command to delete an order represented by the entered order indicator.

**12.** A device according to any of the preceding claims, further comprising means for displaying a last trade indicator in association with the field of static prices.

**13.** A device according to claim 12, wherein the last trade indicator is displayed in a last trade region (1006, 1207).

**14.** A device according to any of the preceding claims, further comprising means for generating the field of static prices.

**15.** A device according to any one of the preceding claims, wherein the first and second indicators comprise numbers (1020, 1101).

**16.** A device according to claim 15, wherein the first indicator comprises the total number of bids in the market at the highest bid price and wherein the second indicator comprises the total number of asks in the market at the lowest ask price.

**17.** A device according to any of the preceding claims, comprising:

means for displaying a first plurality of indicators in relation to a plurality of price levels in the field of static prices, each of the first plurality of indicators being associated with at least one order to buy the commodity; and
means for displaying a second plurality of indicators in relation to a plurality of price levels in the field of static prices, each of the second plurality of indicators being associated with at least one order to sell the commodity.

**18.** A device according to any of the preceding claims wherein at least a portion of the field of static prices is displayed in a column with a plurality of cells, each cell corresponding to a different price level.

**19.** A device according to any one of the preceding claims, wherein the price levels in the field of static prices do not move long enough for the first and/or second indicators to move by at least three price levels.

**20.** A method of operating a device (110 - 116) for displaying data relating to a commodity to be traded on an electronic exchange (101 - 103), comprising:

receiving data relating to the commodity from the electronic exchange, the data comprising a current highest bid price and a current lowest ask price available for the commodity;
displaying a first indicator at a first area aligned with a first price level in a field of static prices (1005, 1203), the first indicator being associated with the current highest bid price for the commodity;
displaying a second indicator at a second area aligned with a second price level in the field of static prices, the second indicator being associated with the current lowest ask price for the commodity; and
updating the display of the first and second indicators such that at least one of the first and second indicators is moved relative to the field of static prices to a different area aligned with a different price level in the field of static prices in response to the receipt of new data representing a different current highest bid price and/or current lowest ask price of the commodity.

21. A method according to claim 20, further comprising updating the display of the first indicator such that the first indicator is displayed at a different area that is aligned with a third price level different from the first price level in the field of static prices, when the highest bid price changes.

22. A method according to claim 20, further comprising updating the display of the second indicator such that the second indicator is displayed at a different area that is aligned with a fourth price level different from the second price level in the field of static prices, when the lowest ask price changes.

23. A method according to any one of claims 20 to 22, further comprising the steps of:

displaying a first plurality of indicators in relation to a plurality of price levels in the field of static prices, each of the first plurality of indicators being associated with at least one order to buy the commodity; and displaying a second plurality of indicators in relation to a plurality of price levels in the field of static prices, each of the second plurality of indicators being associated with at least one order to sell the commodity.

24. A method according to any one of claims 20 to 23, further comprising displaying an entered order indicator aligned with a price level in the field of static prices.

25. A method according to claim 24 further comprising selecting the entered order indicator so as to delete the order represented by it at the associated price level.

26. A method according to any one of claims 20 to 25, further comprising displaying a last trade indicator aligned with a price level on the static price axis.

27. A method according to any one of claims 20 to 26, further comprising displaying a region for receiving a command to delete all working orders.

28. A method according to any one of the claims 20 to 27 further comprising displaying the field of static prices in a column with a plurality of cells, each cell corresponding to a different price level.

29. A method according to any one of the claims 20 to 28 wherein the first indicator is displayed in one of a plurality of areas in a bid display region and wherein the second indicator is displayed in one of a plurality of areas in an ask display region.

30. A method according to claim 29, wherein each area of the bid display region corresponds to a different price level in the field of static prices and each area of the ask display region corresponds to a different price level in the field of static prices.

31. A method according to claim 29 or 30, wherein the bid display region is separate from the ask display region.

32. A method according to any one of claims 29 to 31, wherein the bid and ask display regions comprise columns with a plurality of cells that are displayed as a grid such that the cells of each column are aligned.

33. A computer program product having program code recorded thereon for execution on a computer for receiving commands relating to a commodity to be traded on an electronic exchange, adapted for execution of all of the steps of any one of claims 20 to 32.

# FIG. 1

CONNECTION TO MULTIPLE EXCHANGES

HOST EXCHANGE
B FACILITIES

101 — HOST EXCHANGE

102 — HOST EXCHANGE B

103 — HOST EXCHANGE

MEMBER FIRM
FACILITIES

104 — ROUTER

105 — ROUTER

106 — ROUTER

107 — GATEWAY

108 — GATEWAY

109 — GATEWAY

TT API

CLIENT 110    CLIENT 111    CLIENT 112    CLIENT 113    CLIENT 114    CLIENT 115    CLIENT 116

# FIG. 2

EP 1 531 414 A1

| | Contract | Depth | BidQty | BidPrc | AskPrc | AskQty | LastPrc | LastQty | Total |
|---|---|---|---|---|---|---|---|---|---|
| 1 | CDHO | ● | 785 | 7626 | 7627 | 21 | 7627 | 489 | 8230 |
| 2 | | | 626 | 7625 | 7629 | 815 | | | |
| 3 | | | 500 | 7624 | 7630 | 600 | | | |
| 4 | | | 500 | 7623 | 7631 | 2456 | | | |
| 5 | | | 200 | 7622 | 7632 | 800 | | | |

Column labels: 201, 202, 203, 204, 205

# FIG. 3

| SYCOM FGBL DEC99 | ⊟⎕⊠ |
|---|---|

| E/W | 10:48:44 | BidQ | AskQ | Prc | LTQ |
|---|---|---|---|---|---|
| · | L · 3 | | 104 | 99 | |
| | R · 5 | | 24 | 98 | |
| | 720 | | 33 | 97 | |
| | ✕ · 10 | | 115 | 96 | |
| | 0 | | 32 | 95 | |
| | 10 · 1H | | 27 | 94 | |
| | 50 · 3H | | | | |
| S 0 W 24 | 1K · 5H | | 63 | 93 | |
| S 0 W 7 | CLR | | 45 | 92 | |
| | ✕ · 10 | | 28 | 91 | |
| | 17 · ▽ | | 20 | 90 | 10 |
| B 0 W 15 | CXL | 18 | | 89 | · |
| B 0 W 13 | + · − | 97 | | 88 | |
| | NET 0 | 30 | | 87 | |
| | | 43 | | 86 | |
| B 0 W 17 | NET REAL | 110 | | 85 | |
| | | 23 | | 84 | |
| | | 31 | | 83 | |
| | | 125 | | 82 | |
| | | 21 | | 81 | |

1001 · 1002 · 1003 · 1004 · 1005 · 1006

# FIG. 4

| SYCOM FGBL DEC99 | | | | | [−][□][X] |
|---|---|---|---|---|---|

| E/W | 10:48:44 | | BidQ | AskQ | Prc | LTQ |
|---|---|---|---|---|---|---|
| | L | 3 | | 104 | 99 | |
| | R | 5 | | 24 | 98 | |
| | 720 | | · | 33 | 97 | |
| | × | 10 | | 115 | 96 | |
| | 0 | | | 32 | 95 | |
| | 10 | 1H | | 27 | 94 | |
| | 50 | 3H | | 63 | 93 | 10 |
| S 10 W 14 | 1K | 5H | | | | |
| | CLR | | ·43 | | 92 | · |
| | × | 10 | 125 | | 91 | |
| | 17 | ▽ | 97 | | 90 | |
| B 0 W 15 | CXL | | 18 | | 89 | |
| B 0 W 13 | [+] | [−] | 97 | | 88 | |
| | NET 0 | | 30 | | 87 | · |
| B 0 W 17 | NET REAL | | 43 | | 86 | |
| | | | 110 | | 85 | |
| | | | 23 | | 84 | |
| | | | 31 | | 83 | |
| | | ·: | 125 | · | 82 | |
| | ·: | | 21 | · | 81 | |

1101

# FIG. 5

| E/W | 10:48:44 | | BidQ | AskQ | Prc | LTQ |
|---|---|---|---|---|---|---|
| | L | 3 | | 104 | 99 | |
| | R | 5 | | 24 | 98 | |
| | 720 | | | 33 | 97 | |
| | ✕ | 10 | | 115 | 96 | |
| | 0 | | | 32 | 95 | |
| | 10 | 1H | | 27 | 94 | |
| | 50 | 3H | | 63 | 93 | |
| S 0 W 24 | 1K | 5H | | 45 | 92 | |
| S 0 W 7 | CLR | | | 28 | 91 | |
| | ✕ | 10 | | 20 | 90 | 10 |
| | 17 | ▽ | 18 | | 89 | |
| B 0 W 15 | CXL | | 97 | | 88 | |
| B 0 W 13 | + | − | 30 | | 87 | |
| | NET 0 | | 43 | | 86 | |
| B 0 W 17 | NET REAL | | 110 | | 85 | |
| | | | 23 | | 84 | |
| | | | 31 | | 83 | |
| | | | 125 | | 82 | |
| | | | 21 | | 81 | |

1206, 1205, 1204, 1208, 1201, 1202, 1203, 1207

SYCOM FGBL DEC99

# FIG. 6

START —1301

TRADER HAS MARKET DISPLAYED ON HIS COMPUTER SCREEN

↓

SET QUANTITY VALUES IN APPROPRIATE FIELDS (R/L FIELDS, CURRENT QUANTITY FIELD, NetPos, OR OFFSET.) —1302

↓

POSITION CURSOR OVER DESIRED CELL ON THE MERCURY DISPLAY —1303

↓

IS THIS A TRADING CELL - I.E. THE BidQ OR AskQ COLUMN? —1304

— NO → NO ORDER SENT (MAY ADJUST QUANTITIES OR OTHER RESTRICTIONS DEPENDING ON CELL SELECTED) —1305

END

— YES →

IS LEFT OR RIGHT MOUSE BUTTON CLICKED? —1306

— RIGHT → QUANTITY OF ORDER = VALUE IN R FIELD —1307

— LEFT →

QUANTITY DESCRIPTION CHOSEN? —1308

— OFFSET → QUANTITY OF ORDER = VALUE IN L FIELD —1309

— NUMBER → QUANTITY OF ORDER = CURRENT QUANTITY —1311

— NetPos → QUANTITY OF ORDER = CURRENT NetPos —1312

THIS WILL ADD UP THE QUANTITIES FOR EACH ORDER IN THE MARKET THAT WOULD FILL THE ORDER BEING ENTERED BY THE TRADER - I.E. THE SUM OF ALL QUANTITIES THAT "BETTER" THE ORDER BEING ENTERED

ALL QUANTITIES IN THE MARKET FOR PRICES BETTER THAN OR EQUAL TO THE PRICE IN THE ROW CLICKED —1310

Plus

COLUMN CLICKED? —1313

— BidQ → SEND BUY ORDER TO MARKET FOR PREDEFINED QUANTITY AT THE PRICE OF THE ROW CLICKED —1315

END

— AskQ → SEND SELL ORDER TO MARKET FOR DEFINED QUANTITY AT THE PRICE OF THE ROW CLICKED —1314

END

TRADING WITH MERCURY

EP 1 531 414 A1

**European Patent Office**

**EUROPEAN SEARCH REPORT**

Application Number

EP 04 10 5905

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99/19821 A (DERIVATIVES NET, INC; MAY, R., RAYMOND) 22 April 1999 (1999-04-22) | 1,20,33 | G06F17/60 G06F3/033 |
| A | * page 58, line 11 - page 81, line 12; figures 12-23 * ----- | 2-19, 21-32 | |
| A | WO 99/53424 A (IMPINK, ALBERT, JOSEPH, JR) 21 October 1999 (1999-10-21) * abstract * ----- | 1-33 | |
| A | WO 98/49639 A (LAWRIE, RODERICK, MALCOLM, GORDON) 5 November 1998 (1998-11-05) * abstract * ----- | 1-33 | |

**TECHNICAL FIELDS SEARCHED (Int.Cl.7)**

G06F
H04L

The present search report has been drawn up for all claims

| Place of search | Date of completion of the search | Examiner |
|---|---|---|
| Berlin | 24 March 2005 | Bowler, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

EP 04 10 5905

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2005

| Patent document cited in search report | | Publication date | Patent family member(s) | | Publication date |
|---|---|---|---|---|---|
| WO 9919821 | A | 22-04-1999 | AU | 762863 B2 | 10-07-2003 |
| | | | AU | 1270399 A | 03-05-1999 |
| | | | CA | 2305736 A1 | 22-04-1999 |
| | | | EP | 1023684 A1 | 02-08-2000 |
| | | | JP | 2001520421 T | 30-10-2001 |
| | | | US | 2002099651 A1 | 25-07-2002 |
| | | | WO | 9919821 A1 | 22-04-1999 |
| | | | US | 2003093360 A1 | 15-05-2003 |
| | | | US | 2002138390 A1 | 26-09-2002 |
| | | | US | 6317727 B1 | 13-11-2001 |
| | | | US | 6421653 B1 | 16-07-2002 |
| | | | US | 2003229571 A1 | 11-12-2003 |
| | | | US | 2004015430 A1 | 22-01-2004 |
| | | | US | 2004015431 A1 | 22-01-2004 |
| | | | US | 2003220868 A1 | 27-11-2003 |
| WO 9953424 | A | 21-10-1999 | US | 6211880 B1 | 03-04-2001 |
| | | | CA | 2293272 A1 | 21-10-1999 |
| | | | EP | 0988611 A1 | 29-03-2000 |
| | | | WO | 9953424 A1 | 21-10-1999 |
| WO 9849639 | A | 05-11-1998 | AU | 7220998 A | 24-11-1998 |
| | | | CA | 2288142 A1 | 05-11-1998 |
| | | | CN | 1261450 A | 26-07-2000 |
| | | | EP | 0979479 A1 | 16-02-2000 |
| | | | WO | 9849639 A1 | 05-11-1998 |
| | | | GB | 2339941 A ,B | 09-02-2000 |
| | | | JP | 2001524236 T | 27-11-2001 |

EPO FORM P0459

For more details about this annex : see Official Journal of the European Patent Office, No. 12/82